# EUROPEAN PATENT APPLICATION

(11) **EP 2 728 922 A1**
(43) Date of publication of application: **07.05.2014**
(21) Application number: 11864963.1
(22) Date of filing: 25.11.2011
(51) Int. Cl.: H04W 24/04

(54) **CAPACITY EXPANSION/CONTRACTION METHOD AND DEVICE FOR CONTINUOUS SERVICE**

(30) Priority: 30.06.2011 CN 201110182360
(71) Applicant: ZTE Corporation, Shenzhen, Guangdong 518057 (CN)
(72) Inventor: LIU, Yuxi, Shenzhen, Guangdong 518057 (CN)
(74) Representative: Modiano, Micaela Nadia
(86) International application number: PCT/CN2011/082984
(87) International publication number: WO 2012/151959

(57) **Abstract**

The disclosure discloses a capacity expansion/contraction method and device based on protection switching. The method includes: performing resource locking on a service currently borne on a capacity expansion/contraction path related to a selected link on which capacity expansion/contraction is to be performed and a selected equipment on which capacity expansion/contraction is to be performed, and acquiring routing information and service information of a node or nodes related to a link or links after capacity expansion/contraction; switching the service on the capacity expansion/contraction path onto a protection path; and performing capacity expansion/contraction on a physical link, issuing the routing information and service information of a node or nodes related to a link or links after capacity expansion/contraction to a related node equipment after the capacity expansion/contraction is completed, switching the service onto a working path after capacity expansion/contraction, and releasing the resource locking. With the disclosure, capacity expansion/contraction of continuous service is implemented, ensuring that the service is not affected during the capacity expansion/contraction.

## Description

### TECHNICAL FIELD

The disclosure relates to the field of communication network technology, and in particular to a capacity expansion/contraction method and device for continuous service.

### BACKGROUND

In an engineering application, adjustment of a communication equipment of an existing network, such as addition/deletion of a network node or replacement of an existing equipment, will often be performed which all involve change of a network environment and modification of a physical link such as an optical fibre, a cable and the like. If a service is borne on a path to be altered, then impact of the alteration on the service needs to be taken into consideration, and as much effort as possible should be made to avoid interruption of the service.

In addition, an onsite networking environment is often complicated, with various borne services; the amount of work in manual modification of each involved service is very large, it is hard to ensure the correctness of a modified service, and an existing service may possibly be affected. No solution to an aforementioned problem exists in an existing technique.

### SUMMARY

A purpose of the disclosure is to provide a method for capacity expansion/contraction without interrupting a service based on protection switching, which are used to implement automatic acquisition of related data and implement capacity expansion/contraction of continuous service.

The disclosure provides a capacity expansion/contraction method based on protection switching, which includes:
performing resource locking on a service currently borne on a capacity expansion/contraction path related to a selected link on which capacity expansion/contraction is to be performed and a selected equipment on which capacity expansion/contraction is to be performed, and acquiring routing information and service information of a node or nodes related to a link or links after capacity expansion/contraction;
switching the service on the capacity expansion/contraction path onto a protection path; and
performing capacity expansion/contraction on a physical link, issuing the routing information and service information of a node or nodes related to a link or links after capacity expansion/contraction to a related node equipment after the capacity expansion/contraction is completed, switching the service onto a working path after capacity expansion/contraction, and releasing the resource locking.

The disclosure further provides a capacity expansion/contraction device for continuous service, which includes:
a resource controlling module configured to perform resource locking on a service currently borne on a capacity expansion/contraction path related to a selected link on which capacity expansion/contraction is to be performed and a selected equipment on which capacity expansion/contraction is to be performed, and to release the resource locking after the service is switched onto a working path after capacity expansion/contraction;
an information acquiring module configured to acquire routing information and service information of a node or nodes related to a link or links after capacity expansion/contraction;
a protection switching module configured to switch the service on the capacity expansion/contraction path onto a protection path, and to switch the service onto a working path after capacity expansion/contraction after the routing information and service information of a node or nodes related to a link or links after capacity expansion/contraction is issued to a related node equipment; and
an information issuing module configured to issue the routing information and the service information of the node or nodes related to the link or links after capacity expansion/contraction to the related node equipment.

In an embodiment of the present disclosure, service resources are locked; a currently borne service is switched to a corresponding protection path; after capacity expansion/contraction is completed, the acquired routing information of a node or nodes related to a link or links after capacity expansion/contraction is issued to an adjusted related node equipment; the service is switched from the protection path into a physical link after capacity expansion/contraction, thereby implementing capacity expansion/contraction of continuous service and ensuring that the service is not affected during the capacity expansion/contraction. When data are issued, only a port and a link affected by the capacity expansion/contraction are involved, while a service at another port on an equipment is not affected. All information on capacity expansion/contraction is calculated automatically and correctness thereof is verified, reducing tremendous amount of work and an error probability in manual operation. Resource locking is performed on a service currently borne on a capacity expansion/contraction path related to a selected link on which capacity expansion/contraction is to be performed and a selected equipment on which capacity expansion/contraction is to be performed, so that a capacity expansion/contraction mechanism is more stable and secure.

### BRIEF DESCRIPTION OF THE DRAWINGS

Fig. 1 is a schematic flowchart of a capacity expansion/contraction method for continuous service according to an embodiment of the disclosure;
Fig. 2 is a specific schematic flowchart of a capacity expansion/contraction method for continuous service according to an embodiment of the disclosure;
Fig. 3 is a model diagram of an example of a network structure provided by an embodiment of the disclosure; and
Fig. 4 is a schematic diagram of a structure of a device provided by an embodiment of the disclosure.

### DETAILED DESCRIPTION

In order to solve a problem in an existing technique of large amount of work in manual modification of each involved service, difficulty to ensure the correctness of a modified service, and possibility of affecting an existing service, in an embodiment of the disclosure, when a protection path is configured for a currently borne service, resource locking is performed on the service; the currently borne service is switched onto a corresponding protection path; the acquired routing information of a node or nodes related to a link or links after capacity expansion/contraction to an adjusted related node equipment after capacity expansion/contraction is completed; the service is switched from the protection path into a physical link after capacity expansion/contraction. The solution implements automatic acquisition of related information and ensures continuity of the service.

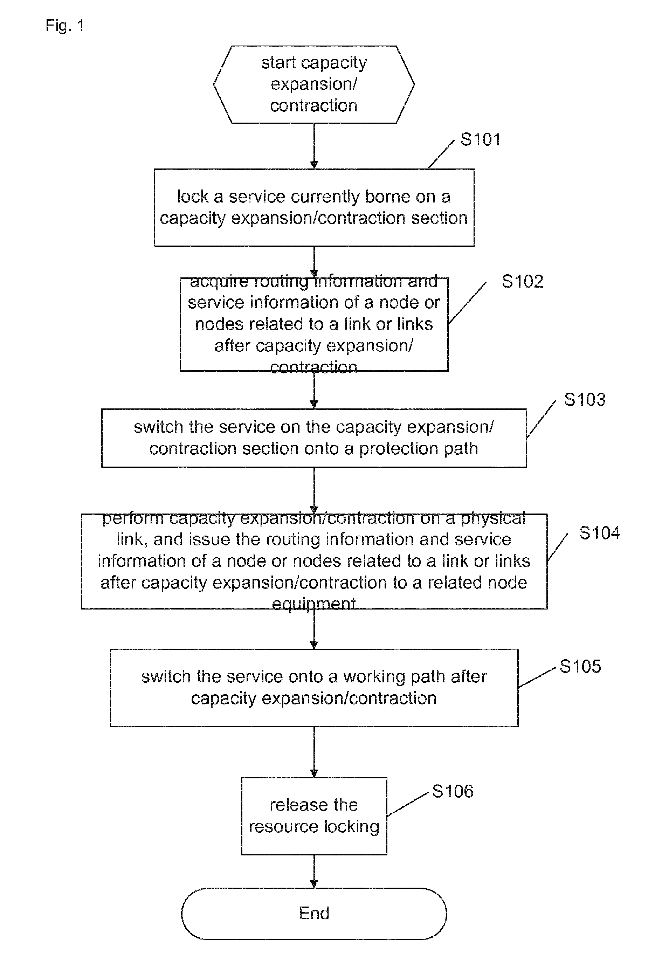

The embodiments of the disclosure are further elaborated below with reference to the drawings of the description. As shown in Fig. 1, a capacity expansion/contraction method for continuous service of an embodiment of the disclosure specifically includes the following steps:
S101: resource locking is performed on a service currently borne on a capacity expansion/contraction path related to a selected link on which capacity expansion/contraction is to be performed and a selected equipment on which capacity expansion/contraction is to be performed;
S102: routing information and service information of a node or nodes related to a link or links after capacity expansion/contraction is acquired;
S103: the service on the capacity expansion/contraction path is switched onto a protection path;
S104: capacity expansion/contraction is performed on a physical link, and the routing information and service information of a node or nodes related to a link or links after capacity expansion/contraction is issued to a related node equipment after the capacity expansion/contraction is completed;
S105: the service is switched onto a working path after capacity expansion/contraction; and
S106: the resource locking is released after the switching is completed.

In the embodiment of the disclosure, before resource locking is performed, it may also be determined, according to stored actual information on an original link, whether the link on which capacity expansion/contraction is to be performed and the equipment on which capacity expansion/contraction is to be performed are correct, if so, the flow continues by performing capacity expansion/contraction; otherwise a user is prompted to re-select a link on which capacity expansion/contraction is to be performed and an equipment on which capacity expansion/contraction is to be performed. Then, it is determined whether a protection path is configured for the service currently borne on the capacity expansion/contraction path related to the selected link on which capacity expansion/contraction is to be performed and the selected equipment on which capacity expansion/contraction is to be performed; if so, the resource locking is performed on the service; otherwise the user is prompted of a specific service for which no protection path is configured, and is prompted to select whether to continue operating; when an instruction to continue operating input by the user is received, the resource locking is performed on the service; otherwise the current flow is terminated.

The routing information and service information of a node or nodes related to a link or links after capacity expansion/contraction is calculated using port information and service information of the selected link on which capacity expansion/contraction is to be performed and the selected equipment on which capacity expansion/contraction is to be performed according to a stored network structure and stored service information; or the routing information and service information of a node or nodes related to a link or links after capacity expansion/contraction is input by a user. When the routing information and service information of a node or nodes related to a link or links after capacity expansion/contraction is input by a user, the routing information and service information of a node or nodes related to a link or links after capacity expansion/contraction input by the user is verified; and when the information is verified to be correct, the service on the capacity expansion/contraction path is switched onto the protection path.

After the capacity expansion/contraction is completed, the acquired routing information of the node or nodes related to the link or links after capacity expansion/contraction is compared with routing information stored within a corresponding related node equipment; and routing information of the node or nodes related to the link or links after capacity expansion/contraction that is different from the routing information stored within a corresponding related node equipment is issued to an adjusted related node equipment.

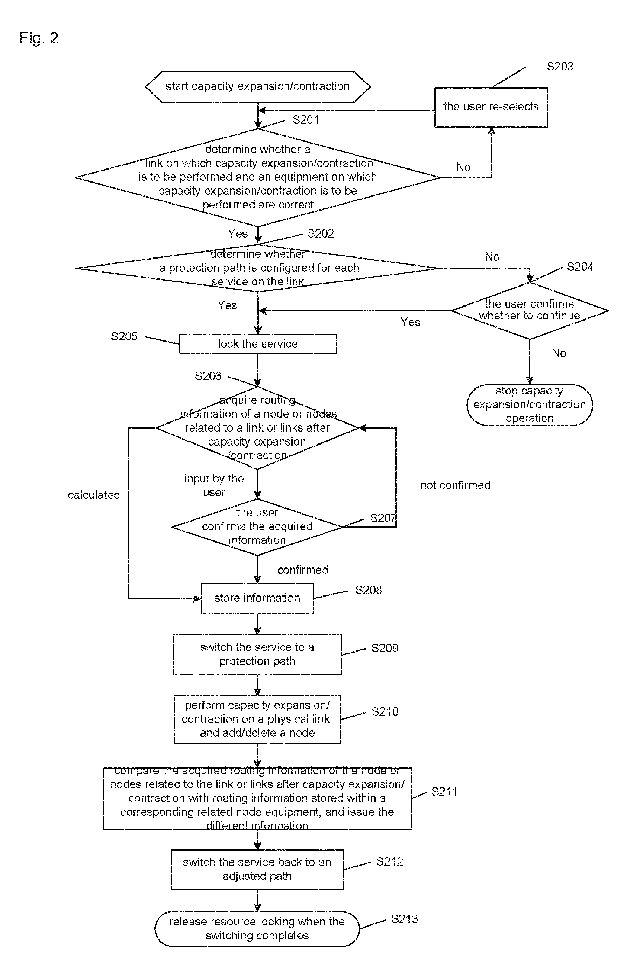

Refer to Fig. 2 for specific steps of an embodiment of the disclosure.

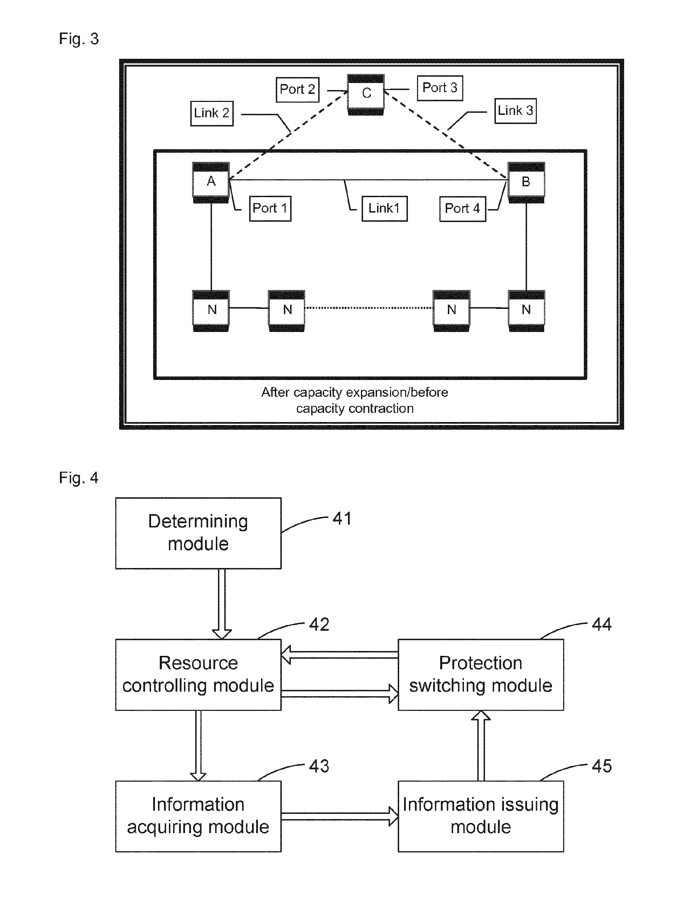

Fig. 3 is a model diagram of capacity expansion/contraction, showing the link of respective equipments in a network. Capacity expansion/contraction is a process of adding/deleting a C node between equipments A and B. The three equipments A, B and C are adapted to being used in a link of an arbitrary protection type.
S201: it is determined whether a link on which capacity expansion/contraction is to be performed and an equipment on which capacity expansion/contraction is to be performed are correct, if so, S202 is executed; otherwise S203 is executed.
S202: after it is determined that the link on which capacity expansion/contraction is to be performed and the equipment on which capacity expansion/contraction is to be performed are correct, the flow continues by determining whether a protection path is configured for each service on the link; if so, S205 continues to be executed; otherwise S204 is executed; when an instruction to continue operating input by the user is received, S205 is executed directly; otherwise the current flow is terminated.
S203: the user re-selects a link on which capacity expansion/contraction is to be performed and an equipment on which capacity expansion/contraction is to be performed, and then the flow turns to S201.
S204: the user is prompted of a specific service for which no protection path is configured, and is prompted to select whether to continue operating.
S205: after it is determined that a protection path is configured or an instruction to continue operating is received from the user, the resource locking is performed on the service to prohibit the user from performing another configuration operation so as to ensure that the process of capacity expansion/contraction is not affected.
S206: routing information and service information of nodes A, B and C involved in capacity expansion is calculated, or may be input by the user, and then S207 is executed; after the input by the user is confirmed to be correct, S208 is executed; otherwise S206 is executed.
S207: a system will verify the correctness of data input by the user.
S208: the information is stored.
S209: the user is prompted to perform a switching operation. The service is switched onto a protection path, so as to ensure that the service on the link is not interrupted during capacity expansion/contraction.
S210: after the switching is completed, capacity expansion/contraction is performed on a physical link to add/delete node C.
S211: after the capacity expansion/contraction is completed, the acquired routing information of a node or nodes related to a link or links after capacity expansion/contraction is compared with routing information carried by nodes A, B and C after link adjustment, when the information carried by nodes A, B and C after link adjustment is different from the stored information, the stored information is issued to each node.
S212: after the issuing of the information is completed, the service is switched back onto an adjusted link.
S213: after the switching is completed, the resource locking is released automatically to recover a function of the link.

Fig. 4 is a diagram of functional modules of a device according to an embodiment of the disclosure. The device of the disclosure is mainly divided into five functional modules: a determining module 41, a resource controlling module 42, an information acquiring module 43, a protection switching module 44 and an information issuing module 45.

The determining module 41 is configured to determine, according to stored actual information on an original link, whether the link on which capacity expansion/contraction is to be performed and the equipment on which capacity expansion/contraction is to be performed are correct, or to determine whether a protection path is configured for the service currently borne on the capacity expansion/contraction path related to the selected link on which capacity expansion/contraction is to be performed and the selected equipment on which capacity expansion/contraction is to be performed.

The resource controlling module 42 is configured to perform resource locking on a service currently borne on a capacity expansion/contraction path related to a selected link on which capacity expansion/contraction is to be performed and a selected equipment on which capacity expansion/contraction is to be performed, and to release the resource locking after the service is switched onto a working path after capacity expansion/contraction.

The information acquiring module 43 is configured to acquire routing information and service information of a node or nodes related to a link or links after capacity expansion/contraction; and to calculate the routing information and service information of a node or nodes related to a link or links after capacity expansion/contraction using port information and service information of the selected link on which capacity expansion/contraction is to be performed and the selected equipment on which capacity expansion/contraction is to be performed according to a stored network structure and stored service information, or to receive the routing information and service information of a node or nodes related to a link or links after capacity expansion/contraction input by a user. The information acquiring module 43 may further be configured to verify the received routing information and service information of a node or nodes related to a link or links after capacity expansion/contraction input by the user after receiving the routing information and service information of a node or nodes related to a link or links after capacity expansion/contraction input by the user.

The protection switching module 44 is configured to switch the service on the capacity expansion/contraction path onto a protection path, and to switch the service onto a working path after capacity expansion/contraction after the routing information and service information of a node or nodes related to a link or links after capacity expansion/contraction is issued to a related node equipment.

The information issuing module 45 is configured to issue the routing information and service information of a node or nodes related to a link or links after capacity expansion/contraction to the related node equipment. The information issuing module 45 is further configured to, before issuing the routing information and service information of a node or nodes related to a link or links after capacity expansion/contraction, compare the acquired routing information of the node or nodes related to the link or links after capacity expansion/contraction with routing information stored within a corresponding related node equipment, and to issue, to an adjusted related node equipment, routing information of the node or nodes related to the link or links after capacity expansion/contraction that is different from the routing information stored within a corresponding related node equipment.

It can be seen from the embodiments of the disclosure that acquisition of information on a related node equipment involved in capacity expansion/contraction by the disclosure is adapted for links using different equipments. Furthermore, before performing the capacity expansion/contraction, the disclosure will determine whether a protection path is configured for a service, verify whether physical path information of a section on which capacity expansion/contraction is to be performed and information on an equipment to be added/removed input by the user is consistent with actual information in a link, and perform resource locking on a service, thus reducing the possibility of interruption of the service in switching. When service switching is carried out, a user is prompted to perform an operation; and the user is prompted to confirm the acquired routing information of a node or nodes related to a link or links after capacity expansion/contraction and the service information borne on the link, thereby improving an efificiency and correctness of capacity expansion/contraction.

Obviously, those skilled in the art can make various modifications and variations to the disclosure without departing from the spirit and scope of the disclosure. Thus, if these modifications and variations of the disclosure fall within the scope of the claims of the disclosure and equivalent technologies thereof, the disclosure is also intended to include these modifications and variations.

### Industrial Applicability

With the present disclosure, service resources are locked; a currently borne service is switched to a corresponding protection path; after capacity expansion/contraction is completed, the acquired routing information of a node or nodes related to a link or links after capacity expansion/contraction is issued to an adjusted related node equipment; the service is switched from the protection path into a physical link after capacity expansion/contraction, thereby implementing capacity expansion/contraction of continuous service and ensuring that the service is not affected during the capacity expansion/contraction. When data are issued, only a port and a link affected by the capacity expansion/contraction are involved, while a service at another port on an equipment is not affected. All information on capacity expansion/contraction is calculated automatically and correctness thereof is verified, reducing tremendous amount of work and an error probability in manual operation. Resource locking is performed on a service currently borne on a capacity expansion/contraction path related to a selected link on which capacity expansion/contraction is to be performed and a selected equipment on which capacity expansion/contraction is to be performed, so that a capacity expansion/contraction mechanism is more stable and secure.

## Claims

1. A capacity expansion/contraction method based on protection switching, comprising:
performing resource locking on a service currently borne on a capacity expansion/contraction path related to a selected link on which capacity expansion/contraction is to be performed and a selected equipment on which capacity expansion/contraction is to be performed, and acquiring routing information and service information of a node or nodes related to a link or links after capacity expansion/contraction;
switching the service on the capacity expansion/contraction path onto a protection path; and
performing capacity expansion/contraction on a physical link, issuing the routing information and service information of a node or nodes related to a link or links after capacity expansion/contraction to a related node equipment after the capacity expansion/contraction is completed, switching the service onto a working path after capacity expansion/contraction, and releasing the resource locking.

2. The method according to claim 1, further comprising: before performing resource locking,
determining, according to stored actual information on an original link, whether the link on which capacity expansion/contraction is to be performed and the equipment on which capacity expansion/contraction is to be performed are correct; when the link and the equipment are correct, performing the resource locking; when the link and the equipment are incorrect, prompting a user to re-select a link on which capacity expansion/contraction is to be performed and an equipment on which capacity expansion/contraction is to be performed.

3. The method according to claim 2, further comprising: after determining that the link on which capacity expansion/contraction is to be performed and the equipment on which capacity expansion/contraction is to be performed are correct,
determining whether a protection path is configured for the service currently borne on the capacity expansion/contraction path related to the selected link on which capacity expansion/contraction is to be performed and the selected equipment on which capacity expansion/contraction is to be performed;
when a protection path is configured, performing the resource locking on the service; and
when no protection path is configured, prompting the user of a specific service for which no protection path is configured and prompting the user to select whether to continue operating; when an instruction to continue operating input by the user is received, performing the resource locking on the service; when no instruction to continue operating is received, terminating a current flow.

4. The method according to claim 1, wherein the routing information and service information of the node or nodes related to the link or links after capacity expansion/contraction is calculated using port information and service information of the selected link on which capacity expansion/contraction is to be performed and the selected equipment on which capacity expansion/contraction is to be performed according to a stored network structure and stored service information; or the routing information and service information of the node or nodes related to the link or links after capacity expansion/contraction is input by a user.

5. The method according to claim 4, further comprising: when the routing information and service information of a node or nodes related to a link or links after capacity expansion/contraction is input by a user,
verifying the routing information and service information of a node or nodes related to a link or links after capacity expansion/contraction input by the user; and when the information is verified to be correct, switching the service on the capacity expansion/contraction path onto the protection path.

6. The method according to claim 1, further comprising the step, before issuing the routing information and service information of a node or nodes related to a link or links after capacity expansion/contraction, of:
comparing the acquired routing information of the node or nodes related to the link or links after capacity expansion/contraction with routing information stored within a corresponding related node equipment; and
issuing, to an adjusted related node equipment, routing information of the node or nodes related to the link or links after capacity expansion/contraction that is different from the routing information stored within the corresponding related node equipment.

7. A capacity expansion/contraction device for continuous service, comprising:
a resource controlling module configured to perform resource locking on a service currently borne on a capacity expansion/contraction path related to a selected link on which capacity expansion/contraction is to be performed and a selected equipment on which capacity expansion/contraction is to be performed, and to release the resource locking after the service is switched onto a working path after capacity expansion/contraction;
an information acquiring module configured to acquire routing information and service information of a node or nodes related to a link or links after capacity expansion/contraction;
a protection switching module configured to switch the service on the capacity expansion/contraction path onto a protection path, and to switch the service onto a working path after capacity expansion/contraction after the routing information and service information of a node or nodes related to a link or links after capacity expansion/contraction is issued to a related node equipment; and
an information issuing module configured to issue the routing information and the service information of the node or nodes related to the link or links after capacity expansion/contraction to the related node equipment.

8. The device according to claim 7, further comprising: a determining module configured to determine, according to stored actual information on an original link, whether the link on which capacity expansion/contraction is to be performed and the equipment on which capacity expansion/contraction is to be performed are correct, and to determine whether a protection path is configured for the service currently borne on the capacity expansion/contraction path related to the selected link on which capacity expansion/contraction is to be performed and the selected equipment on which capacity expansion/contraction is to be performed.

9. The device according to claim 7, wherein the information acquiring module is further configured to calculate the routing information and service information of the node or nodes related to the link or links after capacity expansion/contraction using port information and service information of the selected link on which capacity expansion/contraction is to be performed and the selected equipment on which capacity expansion/contraction is to be performed according to a stored network structure and stored service information, or to receive the routing information and service information of the node or nodes related to the link or links after capacity expansion/contraction input by a user.

10. The device according to claim 9, wherein the information acquiring module is further configured to verify the received routing information and service information of the node or nodes related to the link or links after capacity expansion/contraction input by the user after receiving the routing information and service information of the node or nodes related to the link or links after capacity expansion/contraction input by the user.

11. The device according to claim 7, wherein the information issuing module is further configured to, before issuing the routing information and service information of a node or nodes related to a link or links after capacity expansion/contraction, compare the acquired routing information of the node or nodes related to the link or links after capacity expansion/contraction with routing information stored within a corresponding related node equipment, and to issue, to an adjusted related node equipment, routing information of the node or nodes related to the link or links after capacity expansion/contraction that is different from the routing information stored within the corresponding related node equipment.
